(19) Europäisches Patentamt
European Patent Office
Office européen des brevets

(11) **EP 3 926 780 A1**

(12) **EUROPEAN PATENT APPLICATION**
published in accordance with Art. 153(4) EPC

(43) Date of publication:
**22.12.2021 Bulletin 2021/51**

(51) Int Cl.:
***H02J 3/32*** (2006.01)

(21) Application number: **21754880.9**

(86) International application number:
**PCT/CN2021/078414**

(22) Date of filing: **01.03.2021**

(87) International publication number:
**WO 2021/208613 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2020 CN 202010293665**

(71) Applicant: **Suzhou University of Science and Technology New District Suzhou Jiangsu 215513 (CN)**

(72) Inventors:
• **LI, Ze**
  **Suzhou, Jiangsu 215513 (CN)**
• **XU, Deming**
  **Suzhou, Jiangsu 215513 (CN)**
• **CUI, Guozeng**
  **Suzhou, Jiangsu 215513 (CN)**
• **HAO, Wanjun**
  **Suzhou, Jiangsu 215513 (CN)**

(74) Representative: **Gong, Jinping**
  **CocreateIP**
  **Eggenfeldenerstraße 56**
  **81929 München (DE)**

(54) **DISTRIBUTED FINITE TIME CONTROL METHOD FOR ISOLATED ISLAND MICROGRID HETEROGENEOUS BATTERY ENERGY STORAGE SYSTEM**

(57) The present invention relates to a distributed finite time control method for heterogeneous battery energy storage systems of an island micro-grid. A droop control strategy is adopted in a primary control layer of a local control unit to satisfy load demand in an island micro-grid and stabilize frequency and voltage of the island micro-grid. A secondary frequency control structure and a secondary voltage control structure are respectively designed in a secondary control layer of the local control unit, a battery energy control structure is designed to control battery energy, distributed finite time secondary cooperative control rules are designed by means of distributed communication, output voltage amplitudes and frequencies of battery energy storage systems BESS are restored to rated values within a limited time, and at the same time, an active power of an island micro-grid system is proportionally distributed to make battery energy balanced and consistent. Convergence time is estimated, and the upper bound of the estimated convergence time is independent of the initial state of the island micro-grid system. Distributed control allows each battery energy storage unit to communicate with a neighboring battery energy storage unit thereof, therefore robustness of the system is improved.

Fig. 1

EP 3 926 780 A1

**Description**

**Technical Field**

The present invention relates to a distributed finite time control method for heterogeneous battery energy storage systems of an island micro-grid, which belongs to the technical field of micro-grid control.

**Background**

A micro-grid is a new type of energy structure, which can accommodate a large number of distributed power supplies, loads and energy storage devices, and can operate in both a grid-connected mode and an island mode. When operating in the grid-connected mode, the micro-grid can supply electric energy to or absorb electric energy from a main grid; and once the main grid fails, the micro-grid can be disconnected from a common coupling point and enter the island mode for operation. When operating in the island mode, the micro-grid independently controls voltage and frequency, and satisfies load demand in the micro-grid. In the island mode, some key loads in the micro-grid have high requirements for the quality of electric energy, for this reason, battery energy storage systems are used to supply power to the loads in the island micro-grid, which can satisfy the load demand in the micro-grid and improve the quality of electric energy of the micro-grid at the same time.

A traditional control method for an energy storage system adopts centralized control mode and requires a central control unit to control all energy storage devices in the micro-grid. Such a control mode not only has poor reliability and robustness, but also cannot adapt to the requirement of system expandability. To solve this problem, distributed control methods are widely used in the control of energy storage systems. A distributed control mode can achieve an overall control goal by local communication, and does not require any central control unit for centralized control or a communication link between BESSes, therefore the communication burden and calculation burden are reduced, and the control efficiency is improved.

**Summary**

The purpose of the present invention is to overcome the defects in the prior art, so as to provide a distributed finite time control method for heterogeneous battery energy storage systems of an island micro-grid.

The purpose of the present invention is realized by the following technical solution:

A distributed finite time control method for heterogeneous battery energy storage systems of an island micro-grid, comprising the following steps:

Step (1): adopting a droop control strategy in a primary control layer of a local control unit to satisfy load demand in an island micro-grid and stabilize frequency and voltage of the island micro-grid;

Step (2): respectively designing a secondary frequency control structure and a secondary voltage control structure in a secondary control layer of the local control unit, designing a battery energy control structure to control battery energy, designing distributed finite time secondary cooperative control rules by means of distributed communication, restoring output voltage amplitudes and frequencies of battery energy storage systems BESS to rated values within a limited time, and at the same time, proportionally distributing an active power of an island micro-grid system to make battery energy balanced and consistent;

Step (3): estimating convergence time, and the upper bound of the estimated convergence time being independent of the initial state of the island micro-grid system.

Further, the distributed finite time control method for heterogeneous battery energy storage systems of an island micro-grid according to claim 1, wherein:

In step (1), adopting a droop control strategy in a primary control layer of a local control unit to satisfy load demand in an island micro-grid, load is distributed proportionally, and a droop control rule is as follows:

$$\begin{cases} \omega_i = \omega_i^* - k_i^p P_i \\ v_i = v_i^* - k_i^q Q_i \end{cases} \quad (1)$$

In formula (1), $k_i^p$ and $k_i^q$ respectively represent an output frequency droop coefficient and a voltage amplitude droop coefficient of the $i^{th}$ battery energy storage system BESS; $\omega_i^*$ and $v_i^*$ are respectively a reference output frequency and a reference voltage amplitude of the $i^{th}$ BESS; $P_i$ and $Q_i$ respectively represent an output active power and an reactive power of the $i^{th}$ BESS, and a calculation method for $P_i$ and $Q_i$ is as follows:

$$\begin{cases} P_i = \dfrac{3}{2}(v_{odi}i_{odi} + v_{oqi}i_{oqi})\dfrac{\omega_c}{s + \omega_c} \\ Q_i = \dfrac{3}{2}(v_{odi}i_{oqi} - v_{oqi}i_{odi})\dfrac{\omega_c}{s + \omega_c} \end{cases} \quad (2)$$

In formula (2), $v_{odi}$, $v_{oqi}$, $i_{odi}$ and $i_{oqi}$ are respectively $dq$ axis components of an output voltage $v_{oi}$ and an output current $i_{oi}$ of the $i^{th}$ battery energy storage system BESS; s represents a complex variable, and $\omega_c$ is a cut-off frequency of a low-pass filter.

Further, the distributed finite time control method for heterogeneous battery energy storage systems of an island micro-grid according to claim 1, wherein:

In step (2), the secondary frequency control structure in the secondary control layer of the local control unit is as follows:

$$\frac{d\omega_i^*}{dt} = u_i^\omega + k_i^p u_i^p \quad (3)$$

In formula (3), $u_i^\omega$ and $u_i^p$ are respectively a secondary frequency control input and an active power control input of the $i^{th}$ BESS, and control rules designed for $u_i^\omega$ and $u_i^p$ are respectively expressed as follows:

$$u_i^\omega = c_\omega[\sum_{j=1}^{N} a_{ij}(\omega_j - \omega_i)^{\frac{m}{n}} + b_i(\omega_{ref} - \omega_i)^{\frac{m}{n}}] + c_\omega[\sum_{j=1}^{N} a_{ij}(\omega_j - \omega_i)^{2-\frac{m}{n}} + b_i(\omega_{ref} - \omega_i)^{2-\frac{m}{n}}] \quad (4)$$

$$u_i^p = c_p[\sum_{j=1}^{N} a_{ij}(k_j^p P_j - k_i^p P_i)^{\frac{m}{n}} + \sum_{j=1}^{N} a_{ij}(k_j^p P_j - k_i^p P_i)^{2-\frac{m}{n}}] \quad (5)$$

Wherein $c_\omega$ and $c_p$ are positive control gain parameters; a control parameter m<n, and both m and n are positive odd integer; $\omega_j$ and $\omega_i$ are respectively output frequencies of the $j^{th}$ and the $i^{th}$ BESSes, and $\omega_{ref}$ is a rated frequency of the island micro-grid system; $k_j^p$ and $k_i^p$ respectively represent frequency droop coefficients of the $j^{th}$ and the $i^{th}$ BESSes; $P_j$ and $P_i$ are respectively output active powers of the $j^{th}$ and the $i^{th}$ BESSes; $\alpha_{ij}$ represents a communication weight between the $i^{th}$ and the $j^{th}$ BESSes, if a communication link exists between the $i^{th}$ BESS and the $j^{th}$ BESS, $a_{ij} = \alpha_{ji} > 0$, otherwise $\alpha_{ij} = \alpha_{ji} = 0$; $b_i$ represents a pinning gain, if the $i^{th}$ BESS can receive a rated value provided by the island micro-grid system, $b_i > 0$, otherwise $b_i = 0$; and N represents a total number of BESSes in the island micro-grid;

A secondary frequency control rule makes the output frequencies of the BESSes converge to rated values within a setting time $T(\omega)$, the output active powers of the BESSes are proportionally distributed within the setting time $T(\omega)$, and $T(\omega)$ is specifically expressed as follows:

$$T(\omega) \leq \frac{n\pi(N(N+2))^{\frac{n-m}{4n}}}{2(n-m)\lambda_3} \quad (6)$$

In formula (6), $\lambda_3 = \min\{\lambda_1(L_1 + B_1), \lambda_2(L_3), \lambda_1(L_2 + B_2), \lambda_2(L_4)\}$, $L_1$ is a Laplacian matrix corresponding to an adjacency matrix taking $(c_\omega a_{ij})^{\frac{2n}{m+n}}$ as an element, $B_1$ is a diagonal matrix taking $(c_\omega b_i)^{\frac{2n}{m+n}}$ as a diagonal element, $L_3$ is a Laplacian matrix corresponding to an adjacency matrix taking $(c_p a_{ij})^{\frac{2n}{m+n}}$ as an element, $L_2$ is a Laplacian matrix corresponding to an adjacency matrix taking $(c_\omega a_{ij})^{\frac{2n}{3n-m}}$ as an element, $B_2$ is a diagonal matrix taking $(c_\omega b_i)^{\frac{2n}{3n-m}}$ as a diagonal element, and $L_4$ is a Laplacian matrix corresponding to an adjacency matrix taking $(c_p a_{ij})^{\frac{2n}{3n-m}}$ as an element; $\lambda_1(L_1 + B_1)$ represents the smallest eigenvalue of the matrices $L_1 + B_1$, $\lambda_2(L_3)$ represents the second smallest eigenvalue of the matrix $L_3$, $\lambda_1(L_2 + B_2)$ represents the smallest eigenvalue of the matrices $L_2 + B_2$, $\lambda_2(L_4)$ represents the second smallest eigenvalue of the matrix $L_4$, and min means to take the minimum value; and the upper bound of estimated $T(\omega)$ is irrelevant to the initial state of the island micro-grid system.

Further, the distributed finite time control method for heterogeneous battery energy storage systems of an island micro-grid according to claim 1, wherein:

In step (2), the secondary voltage control structure in the secondary control layer of the local control unit is as follows:

$$\frac{dv_i^*}{dt} = u_i^v + k_i^q \frac{dQ_i}{dt} \quad (7)$$

In formula (7): $u_i^v$ is a secondary voltage control input of the ith BESS, and a control rule designed for $u_i^v$ is expressed as follows:

$$u_i^v = c_v\left[\sum_{j=1}^{N} a_{ij}(v_j - v_i)^{\frac{m}{n}} + b_i(v_{ref} - v_i)^{\frac{m}{n}}\right] + c_v\left[\sum_{j=1}^{N} a_{ij}(v_j - v_i)^{2-\frac{m}{n}} + b_i(v_{ref} - v_i)^{2-\frac{m}{n}}\right] \quad (8)$$

In formula (8), $c_v$ is a positive control gain parameter; a control parameter m<n, and both m and n are positive odd integer; $v_j$ and $v_i$ are respectively output voltage amplitudes of the jth and the ith BESSes, and $v_{ref}$ is a rated voltage amplitude of the island micro-grid system; $\alpha_{ij}$ represents a communication weight between the ith and the jth BESSes, if a communication link exists between the ith BESS and the jth BESS, $\alpha_{ij} = a_{ji} > 0$, otherwise $\alpha_{ij} = \alpha_{ji} = 0$; $b_i$ represents a pinning gain, if the ith BESS can receive a rated value provided by the island micro-grid system, $b_i > 0$, otherwise $b_i = 0$; and N represents a total number of BESSes in the island micro-grid;

A secondary voltage control rule makes the output voltage amplitudes of the BESSes converge to rated values within a setting time $T(v)$, and $T(v)$ is expressed as follows:

$$T(v) \leq \frac{n\pi(N(N+2))^{\frac{n-m}{4n}}}{2(n-m)\lambda_4} \quad (9)$$

In formula (9), $\lambda_4 = \min\{\lambda_1(L_\alpha + B_3), \lambda_1(L_\beta + B_4)\}$, $L_\alpha$ is a Laplacian matrix corresponding to an adjacency matrix

taking $\left(c_v a_{ij}\right)^{\frac{2n}{m+n}}$ as an element, $B_3$ is a diagonal matrix taking $\left(c_v b_i\right)^{\frac{2n}{m+n}}$ as a diagonal element, $L_\beta$ is a Laplacian matrix corresponding to an adjacency matrix taking $\left(c_v a_{ij}\right)^{\frac{2n}{3n-m}}$ as an element, and $B_4$ is a diagonal matrix taking $\left(c_v b_i\right)^{\frac{2n}{3n-m}}$ as a diagonal element; $\lambda_1(L_\alpha + B_3)$ represents the smallest eigenvalue of the matrices $L_\alpha + B_3$, and $\lambda_1(L_\beta + B_4)$ represents the smallest eigenvalue of the matrices $L_\beta + B_4$; min means to take the minimum value; and the upper bound of estimated $T(v)$ is irrelevant to the initial state of the island micro-grid system.

Further, the distributed finite time control method for heterogeneous battery energy storage systems of an island micro-grid according to claim 1, wherein:

In step (2), battery energy control is designed in the secondary control layer of the local control unit, and the battery energy control structure is as follows:

$$\begin{cases} \dfrac{dE_i}{dt} = \dfrac{-k_i^E}{3600} P_i + u_i^E \\ \dfrac{dP_i}{dt} = \dfrac{u_i^P}{k_i^P} \end{cases} \quad (10)$$

In formula (10): $E_i$ is battery energy of the i^th BESS; $k_i^E$ represents a coefficient of heterogeneous feature of the i^th BESS; $P_i$ is the output active power of the i^th BESS; $u_i^P$ represents the active power control input, and the control rule thereof is given in formula (5); $u_i^E$ represents a battery energy control input of the i^th BESS, and a control rule designed is as follows:

$$u_i^E = c_E \left[ \sum_{j=1}^{N} a_{ij} (E_j - E_i)^{\frac{m}{n}} + \sum_{j=1}^{N} a_{ij} (E_j - E_i)^{2-\frac{m}{n}} \right] \quad (11)$$

In formula (11): $c_E$ represents a positive control gain parameter; a control parameter m<n, and both m and n are positive odd integer; $E_j$ and $E_i$ are respectively battery energy of the j^th and the i^th BESSes; $\alpha_{ij}$ represents a communication weight between the i^th and the j^th BESSes, if a communication link exists between the i^th BESS and the j^th BESS, $\alpha_{ij} = \alpha_{ji} > 0$, otherwise $a_{ij} = a_{ji} = 0$ ; and $N$ represents a total number of BESSes in the system;

A battery energy control rule makes the battery energy of all the BESSes in the island micro-grid system capable of converging consistently within a setting time $T(E)$, and $T(E)$ is expressed as follows:

$$T(E) \le \max\{T(\omega), T(\mu)\} \quad (12)$$

In formula (12): max means to take the maximum value; $T(\omega)$ represents a frequency restoring time, and a calculation method therefor is given in formula (6); and a calculation method for $T(\mu)$ is as follows:

$$T(\mu) \le \frac{n\pi N^{\frac{n-m}{2n}}}{2(n-m)\lambda_5} \quad (13)$$

In formula (13), $\lambda_5 = \min\{\lambda_2(L_B), \lambda_2(L_C)\}$, $L_B$ represents a Laplacian matrix corresponding to an adjacency matrix taking $\left(c_E a_{ij}\right)^{\frac{2n}{m+n}}$ as an element, $L_C$ represents a Laplacian matrix corresponding to an adjacency matrix taking

$\left(c_E a_{ij}\right)^{\frac{2n}{3n-m}}$ as an element, $\lambda_2(L_B)$ represents the second smallest eigenvalue of the matrix $L_B$, and $\lambda_2(L_C)$ represents the second smallest eigenvalue of the matrix $L_C$; min means to take the minimum value; and the upper bound of estimated $T(E)$ is irrelevant to the initial state of the island micro-grid system.

Compared with the prior art, the present invention has apparent advantages and beneficial effects specifically reflected as follows:

① Hierarchical control structures are designed, a droop control strategy is adopted in a primary control layer to satisfy load demand in an island micro-grid system, distributed finite time cooperative control is designed in a secondary control layer, output voltage amplitudes and frequencies of battery energy storage systems BESS are restored to rated conditions within a limited time by means of distributed communication, an active power of an island micro-grid system is ensured to be proportionally distributed, and at the same time, distributed finite time control of battery energy is added in the secondary control layer, so that all battery energy storage systems BESS can respond to demand fluctuation in an island micro-grid with the maximum power capacity; convergence time of the finite time control in the secondary control layer is estimated, and the upper bound of the estimated convergence time is independent of the initial state of the island micro-grid;

② For the battery energy storage systems of the island micro-grid, when a distributed control mode is used, each battery energy storage unit only need to communicate and exchange state information with a neighboring battery energy storage unit thereof, and no central control unit is required, therefore the communication burden of the system is reduced, and the reliability and robustness of the system are improved;

③ A secondary frequency control rule and a secondary voltage control rule of heterogeneous battery energy storage systems designed can make the output frequencies and voltage amplitudes of the battery energy storage systems restore to rated conditions, and ensure the proportional distribution of an active power; with a battery energy control rule, the balance and consistency of battery energy is achieved, so that the battery energy storage systems can respond to the load demand in the island micro-grid with the maximum power capacity, all control goals can be completed within a limited time, and a convergence time estimation method is provided;

④ The distributed finite time control method for battery energy storage systems of an island micro-grid of the present invention has a good ability to resist load disturbance.

Other features and advantages of the present invention will be illustrated in the following description, and parts will become apparent from the description, or will be known through the implementation of the specific embodiments of the present invention. The purpose and other advantages of the present invention can be realized and obtained through the structures specially pointed out in the written description and claims.

## Description of Drawings

Fig. 1 is a control flow chart of the present invention;
Fig. 2 is a structural schematic diagram of an island micro-grid system in an embodiment of the present invention;
Fig. 3 is a structural diagram showing communication topology between BESSes in an embodiment of the present invention;
Fig. 4 is a curve chart showing change in frequency of an island micro-grid system in an embodiment of the present invention;
Fig. 5 is a curve chart showing change in output voltage amplitudes of BESSes in an embodiment of the present invention;
Fig. 6 is a curve chart showing change in active powers of BESSes in an embodiment of the present invention; and
Fig. 7 is a curve chart showing change in battery energy of BESSes in an embodiment of the present invention;

## Detailed Description

To understand technical features, purpose and effects of the present invention more clearly, specific embodiments are described in detail.

The distributed finite time control method for heterogeneous battery energy storage systems of an island micro-grid is provided with hierarchical control structures, and a droop control strategy is used in a primary control layer to satisfy load demand in an island micro-grid. In order to solve the problem of frequency and voltage offset caused by droop control, a distributed finite time secondary controller is designed in the secondary control layer based on a distributed cooperative control theory to restore the output voltage amplitudes and frequencies of the battery energy storage systems to rated conditions and ensure that an active power is proportionally distributed. In order to enable the battery energy storage systems respond to the load demand in the island micro-grid with the maximum power capacity, battery energy control is added in the secondary control layer, and a distributed finite time control strategy is designed to achieve the balance and consistency of battery energy.

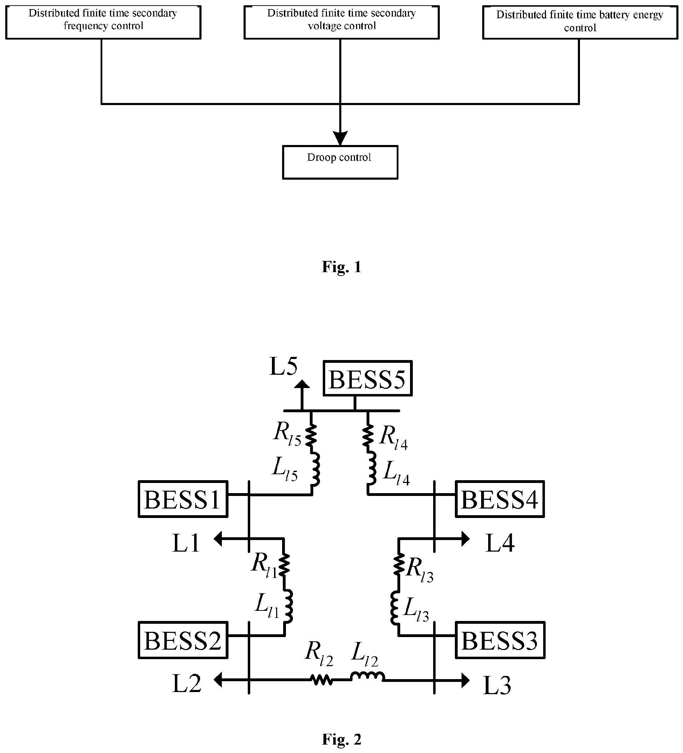

A BESS unit in the present invention is composed of a battery, a voltage source inverter, an LC filter, an output connector, a local control unit, etc., and each local control unit exchanges state information with a neighboring BESS unit thereof through a two-way communication link. A control flow of the present invention is shown in Fig. 1. A droop control mode is adopted in the primary control layer of a local control unit to satisfy the load demand in the island micro-grid, the droop control includes frequency droop control and voltage droop control, and the droop control is as follows:

$$\begin{cases} \omega_i = \omega_i^* - k_i^p P_i \\ v_i = v_i^* - k_i^q Q_i \end{cases} \quad (1)$$

In formula (1), $k_i^p$ and $k_i^q$ respectively represent an output frequency droop coefficient and a voltage amplitude droop coefficient of the i$^{th}$ BESS; $\omega_i^*$ and $v_i^*$ are respectively a reference output frequency and a reference voltage amplitude of the i$^{th}$ BESS; $P_i$ and $Q_i$ respectively represent an output active power and an reactive power of the i$^{th}$ BESS, and a calculation method for $P_i$ and $Q_i$ is as follows:

$$\begin{cases} P_i = \dfrac{3}{2}(v_{odi}i_{odi} + v_{oqi}i_{oqi})\dfrac{\omega_c}{s + \omega_c} \\ Q_i = \dfrac{3}{2}(v_{odi}i_{oqi} - v_{oqi}i_{odi})\dfrac{\omega_c}{s + \omega_c} \end{cases} \quad (2)$$

In formula (2), $v_{odi}$, $v_{oqi}$, $i_{odi}$ and $i_{oqi}$ are respectively *dq* axis components of an output voltage $v_{oi}$ and an output current $i_{oi}$ of the i$^{th}$ battery energy storage system BESS; s represents a complex variable, and $\omega_c$ is a cut-off frequency of a low-pass filter.

The secondary control layer of the local control unit is provided with the secondary frequency control structure as shown below:

$$\frac{d\omega_i^*}{dt} = u_i^\omega + k_i^p u_i^p \quad (3)$$

In formula (3), $u_i^\omega$ and $u_i^p$ are respectively a secondary frequency control input and an active power control input of the i$^{th}$ BESS, and control rules designed for $u_i^\omega$ and $u_i^p$ are respectively expressed as follows:

$$u_i^\omega = c_\omega [\sum_{j=1}^{N} a_{ij}(\omega_j - \omega_i)^{\frac{m}{n}} + b_i(\omega_{ref} - \omega_i)^{\frac{m}{n}}] + c_\omega[\sum_{j=1}^{N} a_{ij}(\omega_j - \omega_i)^{2-\frac{m}{n}} + b_i(\omega_{ref} - \omega_i)^{2-\frac{m}{n}}] \quad (4)$$

$$u_i^p = c_p[\sum_{j=1}^{N} a_{ij}(k_j^p P_j - k_i^p P_i)^{\frac{m}{n}} + \sum_{j=1}^{N} a_{ij}(k_j^p P_j - k_i^p P_i)^{2-\frac{m}{n}}] \quad (5)$$

Wherein $c_\omega$ and $c_p$ are positive control gain parameters; a control parameter m<n, and both m and n are positive odd integer; $\omega_j$ and $\omega_i$, are respectively output frequencies of the j$^{th}$ and the i$^{th}$ BESSes, and $\omega_{ref}$ is a rated frequency of the island micro-grid system; $k_j^p$ and $k_i^p$ respectively represent frequency droop coefficients of the j$^{th}$ and the i$^{th}$ BESSes; $P_j$ and $P_i$ are respectively output active powers of the j$^{th}$ and the i$^{th}$ BESSes; $a_{ij}$ represents a communication weight between the i$^{th}$ and the j$^{th}$ BESSes, if a communication link exists between the i$^{th}$ BESS and the j$^{th}$ BESS, $\alpha_{ij} = \alpha_{ji} > 0$, otherwise $\alpha_{ij} = \alpha_{ji} = 0$; $b_i$ represents a pinning gain, if the i$^{th}$ BESS can receive a rated value provided by the island micro-grid system, $b_i > 0$, otherwise $b_i = 0$; and N represents a total number of BESSes in the island micro-grid;

A secondary frequency control rule makes the output frequencies of the BESSes converge to rated values within a setting time $T(\omega)$, the output active powers of the BESSes are proportionally distributed within the setting time $T(\omega)$, and $T(\omega)$ is specifically expressed as follows:

$$T(\omega) \leq \frac{n\pi(N(N+2))^{\frac{n-m}{4n}}}{2(n-m)\lambda_3} \quad (6)$$

In formula (6), $\lambda_3 = \min\{\lambda_1(L_1 + B_1), \lambda_2(L_3), \lambda_1(L_2 + B_2), \lambda_2(L_4)\}$, , $L_1$ is a Laplacian matrix corresponding to an adjacency matrix taking $(c_\omega a_{ij})^{\frac{2n}{m+n}}$ as an element, $B_1$ is a diagonal matrix taking $(c_\omega b_i)^{\frac{2n}{m+n}}$ as a diagonal element, $L_3$ is a Laplacian matrix corresponding to an adjacency matrix taking $(c_p a_{ij})^{\frac{2n}{m+n}}$ as an element, $L_2$ is a Laplacian matrix corresponding to an adjacency matrix taking $(c_\omega a_{ij})^{\frac{2n}{3n-m}}$ as an element, $B_2$ is a diagonal matrix taking $(c_\omega b_i)^{\frac{2n}{3n-m}}$ as a diagonal element, and $L_4$ is a Laplacian matrix corresponding to an adjacency matrix taking $(c_p a_{ij})^{\frac{2n}{3n-m}}$ as an element; $\lambda_1(L_1 + B_1)$ represents the smallest eigenvalue of the matrices $L_1 + B_1$, $\lambda_2(L_3)$ represents the second smallest eigenvalue of the matrix $L_3$, $\lambda_1(L_2 + B_2)$ represents the smallest eigenvalue of the matrices $L_2 + B_2$, $\lambda_2(L_4)$ represents the second smallest eigenvalue of the matrix $L_4$, and min means to take the minimum value; and the upper bound of estimated $T(\omega)$ is irrelevant to the initial state of the island micro-grid system.

The secondary control layer of the local control unit has the following secondary voltage control rule:

$$\frac{dv_i^*}{dt} = u_i^v + k_i^q \frac{dQ_i}{dt} \quad (7)$$

In formula (7): $u_i^v$ is a secondary voltage control input of the i$^{th}$ BESS, and a control rule designed for $u_i^v$ is expressed as follows:

$$u_i^v = c_v \left[ \sum_{j=1}^{N} a_{ij}(v_j - v_i)^{\frac{m}{n}} + b_i(v_{ref} - v_i)^{\frac{m}{n}} \right] + c_v \left[ \sum_{j=1}^{N} a_{ij}(v_j - v_i)^{2-\frac{m}{n}} + b_i(v_{ref} - v_i)^{2-\frac{m}{n}} \right] \quad (8)$$

In formula (8), $c_v$ is a positive control gain parameter; a control parameter m<n, and both m and n are positive odd integer; $v_j$ and $v_i$ are respectively output voltage amplitudes of the j$^{th}$ and the i$^{th}$ BESSes, and $v_{ref}$ is a rated voltage amplitude of the island micro-grid system; $\alpha_{ij}$ represents a communication weight between the i$^{th}$ and the j$^{th}$ BESSes, if a communication link exists between the i$^{th}$ BESS and the j$^{th}$ BESS, $\alpha_{ij} = \alpha_{ji} > 0$, otherwise $\alpha_{ij} = \alpha_{ji} = 0$; $b_i$ represents a pinning gain, if the i$^{th}$ BESS can receive a rated value provided by the island micro-grid system, $b_i > 0$, otherwise $b_i = 0$; and N represents a total number of BESSes in the island micro-grid;

A secondary voltage control rule makes the output voltage amplitudes of the BESSes converge to rated values within a setting time T($v$), and $T(v)$ is expressed as follows:

$$T(v) \le \frac{n\pi(N(N+2))^{\frac{n-m}{4n}}}{2(n-m)\lambda_4} \quad (9)$$

In formula (9), $\lambda_4 = \min\{\lambda_1(L_\alpha + B_3), \lambda_1(L_\beta + B_4)\}$, $L_\alpha$ is a Laplacian matrix corresponding to an adjacency matrix taking $(c_v a_{ij})^{\frac{2n}{m+n}}$ as an element, $B_3$ is a diagonal matrix taking $(c_v b_i)^{\frac{2n}{m+n}}$ as a diagonal element, $L_\beta$ is a Laplacian matrix corresponding to an adjacency matrix taking $(c_v a_{ij})^{\frac{2n}{3n-m}}$ as an element, and $B_4$ is a diagonal matrix taking $(c_v b_i)^{\frac{2n}{3n-m}}$ as a diagonal element; $\lambda 1(L_\alpha + B_3)$ represents the smallest eigenvalue of the matrices $L_\alpha + B_3$, and $\lambda_1(L_\beta + B_4)$ represents the smallest eigenvalue of the matrices $L_\beta + B_4$; min means to take the minimum value; and the upper bound of estimated $T(v)$ is irrelevant to the initial state of the island micro-grid system.

Battery energy control is added in the secondary control layer of the local control unit, and the specific battery energy control structure is as follows:

$$\begin{cases} \dfrac{dE_i}{dt} = \dfrac{-k_i^E}{3600} P_i + u_i^E \\ \dfrac{dP_i}{dt} = \dfrac{u_i^P}{k_i^P} \end{cases} \quad (10)$$

In formula (10): $E_i$ is battery energy of the i$^{th}$ BESS; $k_i^E$ represents a coefficient of heterogeneous feature of the i$^{th}$ BESS; $P_i$ is the output active power of the i$^{th}$ BESS; $u_i^P$ represents the active power control input, and the control rule thereof is given in formula (5); $u_i^E$ represents a battery energy control input of the i$^{th}$ BESS, and a control rule designed is as follows:

$$u_i^E = c_E \left[ \sum_{j=1}^{N} a_{ij}(E_j - E_i)^{\frac{m}{n}} + \sum_{j=1}^{N} a_{ij}(E_j - E_i)^{2-\frac{m}{n}} \right] \quad (11)$$

In formula (11): $c_E$ represents a positive control gain parameter; a control parameter m<n, and both m and n are positive odd integer; $E_j$ and $E_i$ are respectively battery energy of the $j^{th}$ and the $i^{th}$ BESSes; $\alpha_{ij}$ represents a communication weight between the $i^{th}$ and the $j^{th}$ BESSes, if a communication link exists between the $i^{th}$ BESS and the $j^{th}$ BESS, $\alpha_{ij} = \alpha_{ji} > 0$, otherwise $\alpha_{ij} = \alpha_{ji} = 0$ ; and N represents a total number of BESSes in the system;

A battery energy control rule makes the battery energy of all the BESSes in the island micro-grid system capable of converging consistently within a setting time $T(E)$, and $T(E)$ is expressed as follows:

$$T(E) \leq \max\{T(\omega), T(\mu)\} \quad (12)$$

In formula (12): max means to take the maximum value; $T(\omega)$ represents a frequency restoring time, and a calculation method therefor is given in formula (6); and a calculation method for $T(\mu)$ is as follows:

$$T(\mu) \leq \frac{n\pi N^{\frac{n-m}{2n}}}{2(n-m)\lambda_5} \quad (13)$$

In formula (13), $\lambda_5 = \min\{\lambda_2(L_B), \lambda_2(L_C)\}$, $L_B$ represents a Laplacian matrix corresponding to an adjacency matrix

taking $(c_E a_{ij})^{\frac{2n}{m+n}}$ as an element, $L_C$ represents a Laplacian matrix corresponding to an adjacency matrix taking

$(c_E a_{ij})^{\frac{2n}{3n-m}}$ as an element, $\lambda_2(L_B)$ represents the second smallest eigenvalue of the matrix $L_B$, and $\lambda_2(L_C)$ represents the second smallest eigenvalue of the matrix $L_C$; min means to take the minimum value; and the upper bound of estimated $T(E)$ is irrelevant to the initial state of the island micro-grid system.

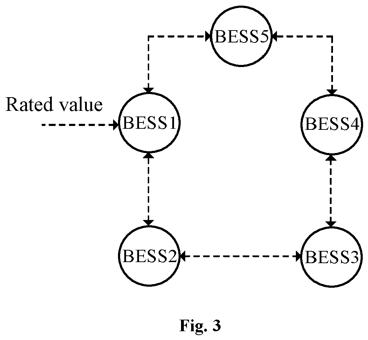

A simulated island micro-grid system as shown in Fig. 2 is built by the present invention in a Matlab/Simulink simulation environment. The system is powered by five distributed BESS units, and comprises five local load units and five power transmission lines. Each BESS unit only exchanges state information with a neighboring BESS unit, and the communication topology between BESSes is shown in Fig. 3. The rated frequency of the island micro-grid is set to be 50 Hz, the rated phase voltage amplitude is 311 V, and the initial battery energy of the system is between 270 kWh and 210 kWh. In this system, BESS1 is the only battery energy storage unit that can receive the rated frequency and rated voltage amplitude of the system.

At the beginning of simulation, only droop control is adopted in the primary control layer of the local control unit, and the control action of the secondary control layer is closed. When t = 10 s, the distributed finite time control secondary control method of the present invention is adopted in the secondary control layer, and load disturbance is set to occur at t = 50 s. The convergence time of the control action is estimated, the upper bound of the time $T(\omega)$ for frequency restoration and proportional distribution of an active power is 10.02 s, the upper bound of the voltage restoring time $T(\nu)$ is 5.45 s, and the upper bound of battery energy balanced and consistent convergence time $T(E)$ 10.02 s.

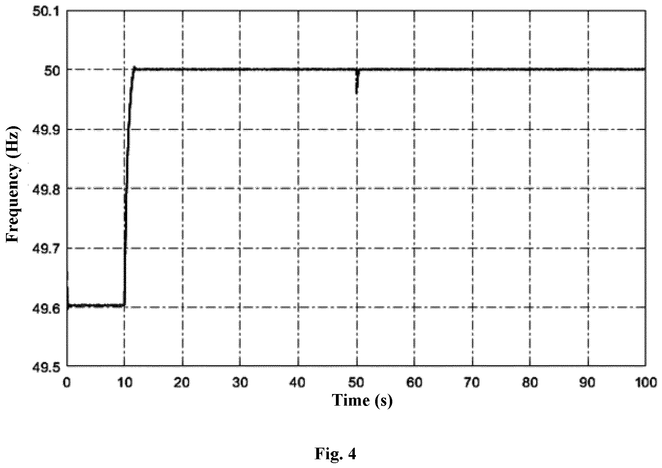

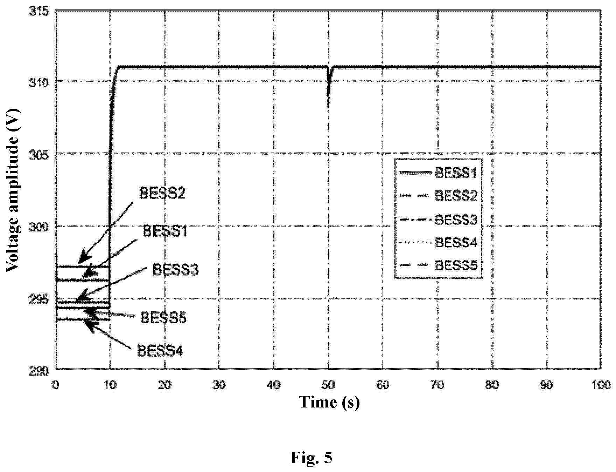

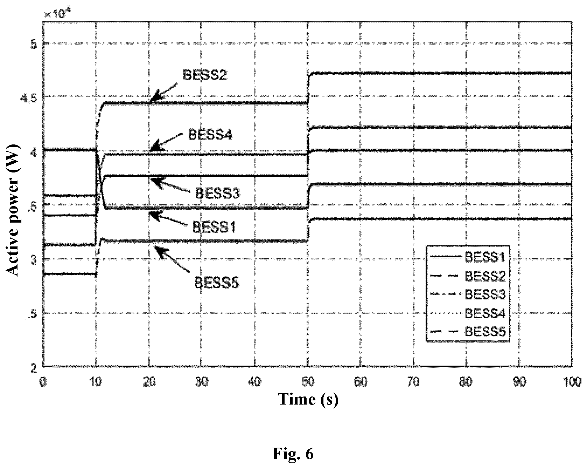

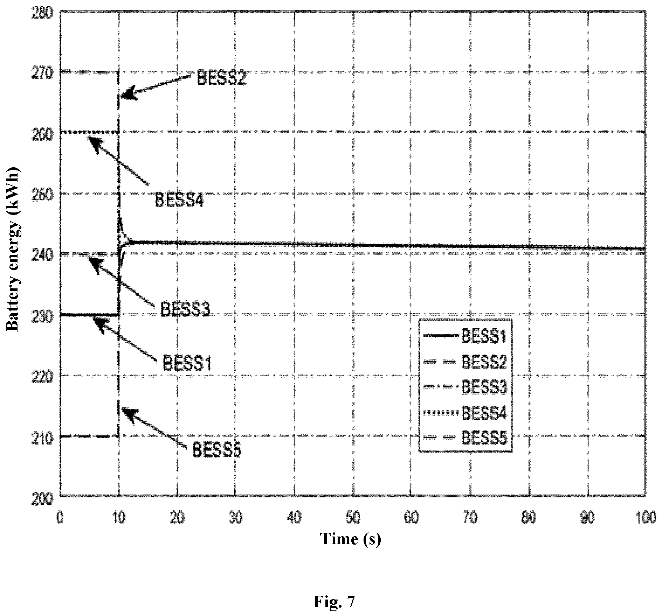

Fig. 4 is a curve chart showing change in frequency of an island micro-grid system, and Fig. 5 is a curve chart showing change in output voltage amplitudes of BESSes. It can be seen from the figures that since only droop control is adopted in 0-10 s, the output frequency and voltage amplitudes deviate from the rated values; after 10 s, as the distributed finite time secondary control method of the present invention is adopted, the frequency and voltage amplitudes are quickly restored to rated conditions, and the convergence time does not exceed the upper bound of the estimated convergence time. Fig. 6 is a curve chart showing change in active powers of BESSes. It can be seen from the figure that under the action of distributed finite time secondary control, the active powers can be proportionally distributed again in a relatively short time, and the convergence time does not exceed the upper bound of the estimated convergence time (10.02 s). Fig. 7 is a curve chart showing change in battery energy of BESSes. It can be seen that the battery energy balanced and consistent convergence time $T(E)$ does not exceed the upper bound of the estimated time (10.02 s). The above control action can also be ensured in the condition of load disturbance.

It can be seen from the simulation that in the distributed finite time secondary control method of the present invention, a distributed control mode is adopted, each BESS unit only exchanges state information with a neighboring BESS unit, the frequency and voltage amplitudes of the system are restored to rated conditions within a limited time, and at the same time, the proportional distribution of the output active powers of the system is ensured to make battery energy balanced and consistent and improve the quality of electric energy of the island micro-grid system, so that the battery energy storage systems can respond to the load demand in the system with the maximum power capacity, and power supply reliability is improved.

It should be noted that: the above only describes the preferred embodiments of the present invention and is not intended to limit the protection scope of the present invention. At the same time, the above description can be understood and implemented by those skilled in the related art. Therefore, other equivalent changes or modifications completed without departing from the spirit revealed by the present invention shall be included in the scope of the applied patent.

**Claims**

1. A distributed finite time control method for heterogeneous battery energy storage systems of an island micro-grid, comprising the following steps:

   step (1): adopting a droop control strategy in a primary control layer of a local control unit to satisfy load demand in an island micro-grid and stabilize frequency and voltage of the island micro-grid;
   step (2): respectively designing a secondary frequency control structure and a secondary voltage control structure in a secondary control layer of the local control unit, designing a battery energy control structure to control battery energy, designing distributed finite time secondary cooperative control rules by means of distributed communication, restoring output voltage amplitudes and frequencies of battery energy storage systems BESS to rated values within a limited time, and at the same time, proportionally distributing an active power of an island micro-grid system to make battery energy balanced and consistent;
   step (3): estimating convergence time, and the upper bound of the estimated convergence time being independent of the initial state of the island micro-grid system.

2. The distributed finite time control method for heterogeneous battery energy storage systems of an island micro-grid according to claim 1, wherein:
   in step (1), adopting a droop control strategy in a primary control layer of a local control unit to satisfy load demand in an island micro-grid, load is distributed proportionally, and a droop control rule is as follows:

$$\begin{cases} \omega_i = \omega_i^* - k_i^p P_i \\ v_i = v_i^* - k_i^q Q_i \end{cases} \quad (1)$$

   in formula (1), $k_i^p$ and $k_i^q$ respectively represent an output frequency droop coefficient and a voltage amplitude droop coefficient of the $i^{th}$ battery energy storage system BESS; $\omega_i^*$ and $v_i^*$ are respectively a reference output frequency and a reference voltage amplitude of the $i^{th}$ BESS; $P_i$ and $Q_i$ respectively represent an output active power and an reactive power of the $i^{th}$ BESS, and a calculation method for $P_i$ and $Q_i$ is as follows:

$$\begin{cases} P_i = \frac{3}{2}(v_{odi}i_{odi} + v_{oqi}i_{oqi})\frac{\omega_c}{s + \omega_c} \\ Q_i = \frac{3}{2}(v_{odi}i_{oqi} - v_{oqi}i_{odi})\frac{\omega_c}{s + \omega_c} \end{cases} \quad (2)$$

   in formula (2), $v_{odi}$, $v_{oqi}$, $i_{odi}$ and $i_{oqi}$ are respectively $dq$ axis components of an output voltage $v_{oi}$ and an output current $i_{oi}$ of the $i^{th}$ battery energy storage system BESS; s represents a complex variable, and $\omega_c$ is a cut-off frequency of a low-pass filter.

3. The distributed finite time control method for heterogeneous battery energy storage systems of an island micro-grid according to claim 1, wherein:
in step (2), the secondary frequency control structure in the secondary control layer of the local control unit is as follows:

$$\frac{d\omega_i^*}{dt} = u_i^\omega + k_i^p u_i^p \quad (3)$$

in formula (3), $u_i^\omega$ and $u_i^p$ are respectively a secondary frequency control input and an active power control input of the $i^{th}$ BESS, and control rules designed for $u_i^\omega$ and $u_i^p$ are respectively expressed as follows:

$$u_i^\omega = c_\omega [\sum_{j=1}^N a_{ij}(\omega_j - \omega_i)^{\frac{m}{n}} + b_i(\omega_{ref} - \omega_i)^{\frac{m}{n}}] + c_\omega [\sum_{j=1}^N a_{ij}(\omega_j - \omega_i)^{2-\frac{m}{n}} + b_i(\omega_{ref} - \omega_i)^{2-\frac{m}{n}}] \quad (4)$$

$$u_i^p = c_p [\sum_{j=1}^N a_{ij}(k_j^p P_j - k_i^p P_i)^{\frac{m}{n}} + \sum_{j=1}^N a_{ij}(k_j^p P_j - k_i^p P_i)^{2-\frac{m}{n}}] \quad (5)$$

wherein $c_\omega$ and $c_p$ are positive control gain parameters; a control parameter m<n, and both m and n are positive odd integer; $\omega_j$ and $\omega_i$ are respectively output frequencies of the $j^{th}$ and the $i^{th}$ BESSes, and $\omega_{ref}$ is a rated frequency of the island micro-grid system; $k_j^p$ and $k_i^p$ respectively represent frequency droop coefficients of the $j^{th}$ and the $i^{th}$ BESSes; $P_j$ and $P_i$ are respectively output active powers of the $j^{th}$ and the $i^{th}$ BESSes; $\alpha_{ij}$ represents a communication weight between the $i^{th}$ and the $j^{th}$ BESSes, if a communication link exists between the $i^{th}$ BESS and the $j^{th}$ BESS, $\alpha_{ij} = \alpha_{ji} > 0$, otherwise $\alpha_{ij} = \alpha_{ji} = 0$; $b_i$ represents a pinning gain, if the $i^{th}$ BESS can receive a rated value provided by the island micro-grid system, $b_i > 0$, otherwise $b_i = 0$; and N represents a total number of BESSes in the island micro-grid;
a secondary frequency control rule makes the output frequencies of the BESSes converge to rated values within a setting time $T(\omega)$, the output active powers of the BESSes are proportionally distributed within the setting time $T(\omega)$, and $T(\omega)$ is specifically expressed as follows:

$$T(\omega) \leq \frac{n\pi(N(N+2))^{\frac{n-m}{4n}}}{2(n-m)\lambda_3} \quad (6)$$

in formula (6), $\lambda_3 = \min\{\lambda_1(L_1 + B_1), \lambda_2(L_3), \lambda_1(L_2 + B_2), \lambda_2(L_4)\}$, $L_1$ is a Laplacian matrix corresponding to an adjacency matrix taking $(c_\omega a_{ij})^{\frac{2n}{m+n}}$ as an element, $B_1$ is a diagonal matrix taking $(c_\omega b_i)^{\frac{2n}{m+n}}$ as a diagonal element, $L_3$ is a Laplacian matrix corresponding to an adjacency matrix taking $(c_p a_{ij})^{\frac{2n}{m+n}}$ as an element, $L_2$ is a Laplacian matrix corresponding to an adjacency matrix taking $(c_\omega a_{ij})^{\frac{2n}{3n-m}}$ as an element, $B_2$ is a diagonal matrix taking $(c_\omega b_i)^{\frac{2n}{3n-m}}$ as a diagonal element, and $L_4$ is a Laplacian matrix corresponding to an adjacency matrix taking

$(c_p a_{ij})^{\frac{2n}{3n-m}}$ as an element; $\lambda_1(L_1 + B_1)$ represents the smallest eigenvalue of the matrices $L_1 + B_1$, $\lambda_2(L_3)$ represents the second smallest eigenvalue of the matrix $L_3$, $\lambda_1(L_2 + B_2)$ represents the smallest eigenvalue of the matrices $L_2 + B_2$, $\lambda_2(L_4)$ represents the second smallest eigenvalue of the matrix $L_4$, and min means to take the minimum value; and the upper bound of estimated $T(\omega)$ is irrelevant to the initial state of the island micro-grid system.

4. The distributed finite time control method for heterogeneous battery energy storage systems of an island micro-grid according to claim 1, wherein:
in step (2), the secondary voltage control structure in the secondary control layer of the local control unit is as follows:

$$\frac{dv_i^*}{dt} = u_i^v + k_i^q \frac{dQ_i}{dt} \quad (7)$$

in formula (7): $u_i^v$ is a secondary voltage control input of the $i^{th}$ BESS, and a control rule designed for $u_i^v$ is expressed as follows:

$$u_i^v = c_v [\sum_{j=1}^N a_{ij}(v_j - v_i)^{\frac{m}{n}} + b_i(v_{ref} - v_i)^{\frac{m}{n}}] + c_v[\sum_{j=1}^N a_{ij}(v_j - v_i)^{2-\frac{m}{n}} + b_i(v_{ref} - v_i)^{2-\frac{m}{n}}] \quad (8)$$

in formula (8), $c_v$ is a positive control gain parameter; a control parameter m<n, and both m and n are positive odd integer; $v_j$ and $v_i$ are respectively output voltage amplitudes of the $j^{th}$ and the $i^{th}$ BESSes, and $v_{ref}$ is a rated voltage amplitude of the island micro-grid system; $\alpha_{ij}$ represents a communication weight between the $i^{th}$ and the $j^{th}$ BESSes, if a communication link exists between the $i^{th}$ BESS and the $j^{th}$ BESS, $\alpha_{ij} = \alpha_{ji} > 0$, otherwise $\alpha_{ij} = \alpha_{ji} = 0$; $b_i$ represents a pinning gain, if the $i^{th}$ BESS can receive a rated value provided by the island micro-grid system, $b_i > 0$, otherwise $b_i = 0$; and $N$ represents a total number of BESSes in the island micro-grid;
a secondary voltage control rule makes the output voltage amplitudes of the BESSes converge to rated values within a setting time $T(v)$, and $T(v)$ is expressed as follows:

$$T(v) \le \frac{n\pi(N(N+2))^{\frac{n-m}{4n}}}{2(n-m)\underline{\lambda_4}} \quad (9)$$

in formula (9), $\lambda_4 = \min\{\lambda_1(L_\alpha + B_3), \lambda_1(L_\beta + B_4)\}$, $L_a$ is a Laplacian matrix corresponding to an adjacency matrix taking $(c_v a_{ij})^{\frac{2n}{m+n}}$ as an element, $B_3$ is a diagonal matrix taking $(c_v b_i)^{\frac{2n}{m+n}}$ as a diagonal element, $L_\beta$ is a Laplacian matrix corresponding to an adjacency matrix taking $(c_v a_{ij})^{\frac{2n}{3n-m}}$ as an element, and $B_4$ is a diagonal matrix taking $(c_v b_i)^{\frac{2n}{3n-m}}$ as a diagonal element; $\lambda_1(L_\alpha + B_3)$ represents the smallest eigenvalue of the matrices $L_\alpha + B_3$, and $\lambda_1(L_\beta + B_4)$ represents the smallest eigenvalue of the matrices $L_\beta + B_4$; min means to take the minimum value; and the upper bound of estimated $T(v)$ is irrelevant to the initial state of the island micro-grid system.

5. The distributed finite time control method for heterogeneous battery energy storage systems of an island micro-grid according to claim 1, wherein:
in step (2), battery energy control is designed in the secondary control layer of the local control unit, and the battery energy control structure is as follows:

$$\begin{cases} \dfrac{dE_i}{dt} = \dfrac{-k_i^E}{3600} P_i + u_i^E \\ \dfrac{dP_i}{dt} = \dfrac{u_i^p}{k_i^p} \end{cases} \qquad (10)$$

in formula (10): $E_i$ is battery energy of the i<sup>th</sup> BESS; $k_i^E$ represents a coefficient of heterogeneous feature of the i<sup>th</sup> BESS; $P_i$ is the output active power of the i<sup>th</sup> BESS; $u_i^p$ represents the active power control input, and the control rule thereof is given in formula (5); $u_i^E$ represents a battery energy control input of the i<sup>th</sup> BESS, and a control rule designed is as follows:

$$u_i^E = c_E \left[ \sum_{j=1}^{N} a_{ij} (E_j - E_i)^{\frac{m}{n}} + \sum_{j=1}^{N} a_{ij} (E_j - E_i)^{2-\frac{m}{n}} \right] \quad (11)$$

in formula (11): $c_E$ represents a positive control gain parameter; a control parameter m<n, and both m and n are positive odd integer; $E_j$ and $E_i$ are respectively battery energy of the j<sup>th</sup> and the i<sup>th</sup> BESSes; $\alpha_{ij}$ represents a communication weight between the i<sup>th</sup> and the j<sup>th</sup> BESSes, if a communication link exists between the i<sup>th</sup> BESS and the j<sup>th</sup> BESS, $\alpha_{ij} = \alpha_{ji} > 0$, otherwise $\alpha_{ij} = \alpha_{ji} = 0$ ; and $N$ represents a total number of BESSes in the system;
a battery energy control rule makes the battery energy of all the BESSes in the island micro-grid system capable of converging consistently within a setting time $T(E)$, and $T(E)$ is expressed as follows:

$$T(E) \le \max\{T(\omega), T(\mu)\} \quad (12)$$

in formula (12): max means to take the maximum value; $T(\omega)$ represents a frequency restoring time, and a calculation method therefor is given in formula (6); and a calculation method for $T(\mu)$ is as follows:

$$T(\mu) \le \frac{n\pi N^{\frac{n-m}{2n}}}{2(n-m)\lambda_5} \quad (13)$$

in formula (13), $\lambda_5 = \min\{\lambda_2(L_B), \lambda_2(L_C)\}$, $L_B$ represents a Laplacian matrix corresponding to an adjacency matrix taking $\left(c_E a_{ij}\right)^{\frac{2n}{m+n}}$ as an element, $L_C$ represents a Laplacian matrix corresponding to an adjacency matrix taking $\left(c_E a_{ij}\right)^{\frac{2n}{3n-m}}$ as an element, $\lambda_2(L_B)$ represents the second smallest eigenvalue of the matrix $L_B$, and $\lambda_2(L_C)$ represents the second smallest eigenvalue of the matrix $L_C$; min means to take the minimum value; and the upper bound of estimated $T(E)$ is irrelevant to the initial state of the island micro-grid system.

| Distributed finite time secondary frequency control | Distributed finite time secondary voltage control | Distributed finite time battery energy control |
|---|---|---|

Droop control

**Fig. 1**

L5

BESS5

$R_{l5}$   $R_{l4}$

$L_{l5}$   $L_{l4}$

BESS1   BESS4

L1   L4

$R_{l1}$   $R_{l3}$

$L_{l1}$   $L_{l3}$

BESS2   BESS3

L2   $R_{l2}$   $L_{l2}$   L3

**Fig. 2**

**Fig. 3**

**Fig. 4**

**Fig. 5**

**Fig. 6**

**Fig. 7**

## INTERNATIONAL SEARCH REPORT

| International application No. |
|---|
| **PCT/CN2021/078414** |

**A. CLASSIFICATION OF SUBJECT MATTER**

H02J 3/32(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, USTXT, IEEE: 孤岛, 微网, 微电网, 电池, 储能, 分布式, 有限时间, 时间, 控制, 电压, 频率, 下垂控制, 有功, 无功, island+, microgrid+, battery, storage, distribut+, finite-time, time, control, voltage, frequency, droop control, active power, reactive power.

**C. DOCUMENTS CONSIDERED TO BE RELEVANT**

| Category* | Citation of document, with indication, where appropriate, of the relevant passages | Relevant to claim No. |
|---|---|---|
| PX | CN 111371112 A (SUZHOU UNIVERSITY OF SCIENCE AND TECHNOLOGY) 03 July 2020 (2020-07-03) claims 1-5 | 1-5 |
| PX | 许德明 等 (XU, Deming et al.). "孤岛微电网异构电池储能系统的分布式有限时间次级控制 (Distributed Finite-Time Secondary Control for Heterogeneous Battery Energy Storage Systems in an Islanded Microgrid)" 控制与决策 (Control and Decision), 03 July 2020 (2020-07-03), ISSN: 1001-0920, page 2, right-hand column - page 5, right-hand column | 1-5 |
| Y | Junyan Hu et al. "Distributed Finite-Time Consensus Control for Heterogeneous Battery Energy Storage Systems in Droop-Controlled Microgrids" *IEEE TRANSACTIONS ON SMART GRID*, Vol. 5, No. 10, 30 September 2019 (2019-09-30), ISSN: 1949-3053, page 4752, right-hand column - page 4753 right-hand column, figure 1 | 1-2 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2021** | **01 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/078414** |

**C.      DOCUMENTS CONSIDERED TO BE RELEVANT**

| Category* | Citation of document, with indication, where appropriate, of the relevant passages | Relevant to claim No. |
|---|---|---|
| Y | 陈刚 等 (CHEN, Gang et al.). "孤岛微电网的分布式固定时间二次协调控制 (Distributed Fixed-Time Secondary Coordination Control of Islanded Microgrids)" 控制与决策 (Control and Decision), Vol. 1, No. 34, 31 January 2019 (2019-01-31), ISSN: 1001-0920,<br>　　　page 206, right-hand column - page 210 left-hand column | 1-2 |
| A | CN 109687526 A (NORTH CHINA ELECTRIC POWER UNIVERSITY) 26 April 2019 (2019-04-26)<br>　　　entire document | 1-5 |
| A | CN 105634020 A (SOUTHEAST UNIVERSITY) 01 June 2016 (2016-06-01)<br>　　　entire document | 1-5 |
| A | CN 110854927 A (STATE GRID FUJIAN ELECTRIC POWER COMPANY et al.) 28 February 2020 (2020-02-28)<br>　　　entire document | 1-5 |

Form PCT/ISA/210 (second sheet) (January 2015)

**INTERNATIONAL SEARCH REPORT**
Information on patent family members

International application No.

**PCT/CN2021/078414**

| Patent document cited in search report | | | Publication date (day/month/year) | Patent family member(s) | | | Publication date (day/month/year) |
|---|---|---|---|---|---|---|---|
| CN | 111371112 | A | 03 July 2020 | None | | | |
| CN | 109687526 | A | 26 April 2019 | None | | | |
| CN | 105634020 | A | 01 June 2016 | CN | 105634020 | B | 06 February 2018 |
| CN | 110854927 | A | 28 February 2020 | None | | | |

Form PCT/ISA/210 (patent family annex) (January 2015)